# EUROPEAN PATENT APPLICATION

(11) **EP 1 396 997 A2**
(43) Date of publication of application: **10.03.2004**
(21) Application number: 03019781.8
(22) Date of filing: 29.08.2003
(51) Int. Cl.: H04N 5/272

(54) **Image Display System and Display Device**

(30) Priority: 30.08.2002 JP 2002253428
(71) Applicant: Rohm Co., Ltd., Kyoto-shi Kyoto 615-8585 (JP)
(72) Inventor: Marumoto, Kyoji, Kyoto-shi, Kyoto 615-8585 (JP)
(74) Representative: Leson, Thomas Johannes Alois, Dipl.-Ing.

(57) **Abstract**

Image data to be the frame image is pre-stored in a display memory, while only an updating area in a display memory, namely an area image data of a specific area, is DMA transferred. Therefore, the amount of data transfer required for the captured image data is reduced, and the numbers of operation times of transferring the image data is also reduced.

## Description

### BACKGROUND OF THE INVENTION

### 1.Field of the Invention

The present invention relates to an image display system which enables a captured image to be displayed in a frame image, and a display device capable of displaying a captured image in a frame image.

### 2.Description of the Related Art

In mobile devices, such as camera-equipped cellular phones; PDAs, and personal computers, an in-frame image capturing function is frequently used. That is, when an image captured by the camera is displayed by the display device, the captured image is composed into a frame image with a predetermined shape, and displays the composite image on the display panel.

More specifically, in the camera-equipped cellular phone, according to the in-frame image capturing function, the Host CPU contained therein first loads the captured image into the work memory, and composes the captured image with a frame image being already stored, by a software process to form an in-frame captured image. Then, the in-frame captured image is stored into a display memory To display the in-frame captured image, the image is read out of the display memory and displayed on the display panel.

In the cellular phone having the conventional in-frame image capturing function, the image data transfer is performed twice. That is, the first image data transfer is loading the captured image into the work memory, and the second one is transferring the in-frame captured image composed by the CPU to the display memory. Therefore, the bus occupation rate becomes high, and moreover, the software processing for composing the images ends up increasing the CPU processing load.

On the other hand, JP-A-08-32944 discloses an image transmitter such that the images captured by two cameras located at separated two positions are transmitted and composed with each other. In this case, a window is set for one of the captured images to remove unnecessary image area thereof before the image is transmitted. In other words, the image transmitter can remove some unnecessary part of the image data to be transmitted beforehand, however, the image transmitter eventually has to fetch the captured image data captured by the two cameras, and compose the image data and stores said composed image data into the display memory. Therefore, although the image transmitter, having such an in-frame image capturing function, is incorporated into the conventional cellular phone, the aforementioned problems, such as reducing the bus occupation rate or the CPU processing load, are hardly to be overcome.

### SUMMARY OF THE INVENTION

Accordingly, an object of the present invention is to provide an image display system and a display device whose bus occupation rate and/or the CPU processing load can be reduced, by reducing the amount of transferring the captured image data and the number of transfer operation times of the image data so that the display frame rate can be improved.

According to a broad aspect of the invention, there is provided an image display system comprising: a display memory for storing display image data to be displayed on a display panel; an area image data generating section for supplying an area image data which is corresponding to a specific area of a captured image data by a image capturing device to said display memory; and a CPU which is coupled to said display memory and to said area image data generating section so as to perform controls thereof , wherein said CPU stores a frame image data to be a frame image into said display memory before said area image data is transferred to said display memory, whereby said frame image data and said area image data are composed with each other to form an in-frame captured image data to be stored into said display memory, said in-frame captured image data being displayed on said display panel. According to another broad aspect of the invention, there is provided a display device comprising:
a display panel; a display memory for storing a display image data to be displayed on a display panel; storing means for storing a frame image data to be a frame image to be supplied , to said display memory; an image capturing device; an area image data generating section for supplying an area image data which is corresponding to a specific area of an image data captured by said image capturing device to said display memory; and a CPU which is connected to said display panel, said display memory, said storing means, said image capturing device, and said area image data generating section so as to perform controls thereof, wherein said CPU reads out a frame image data to be a frame image from said storing means and stores said frame image data into said display memory before said area image data is transferred to said display memory, whereby said frame image data and said area image data are composed with each other to form an in-frame captured image data to be stored into said display memory; said in-frame captured image data being displayed on said display panel.

In an embodiment of the display device, the area image data generating section includes a buffer memory for storing said captured image data, specific area storing means for storing said specific area in said captured image, and a transfer address generating circuit for successively generating addresses of said specific area in said specific area storing means, wherein the addresses of said specific area generated by said transfer address generating circuit are also supplied to said buffer memory so that an image data specified by said addresses are successively read out and output.

In another embodiment of the display device, the area image data generating section supplies to said display memory with said area image data corresponding to said specific area as a valid data, while an image data other than said specific area is defined as an invalid data.

In yet another embodiment of the display device, the area image data generating section includes a buffer memory for storing captured image data, specific area storing means for storing a specific area in the captured image, a gate means for receiving a gate signal from the specific area storing means, and a read-out address generating circuit for generating a read-out address and supplying the read-out address to the buffer memory and the gate means, wherein only the read-out address corresponding to the specific area stored in the specific area storing means is passed through the gate means, the area image data is made valid, and the image data other than the area image data is made invalid.

In a further embodiment of the display device, the specific area storing means includes an area memory for storing the specific area as an area map.

In the display device, the specific area storing means includes an area register used for determining the specific area in accordance with the coordinates for a plurality of points.

Also in the display device, the specific area storing means includes an area memory for storing the specific area as an area map, and the read-out address generating circuit includes an area register used for determining a specific area for generating a read-out address in accordance with the coordinates for a plurality of points,

### BRIEF DESCRIPTION OF THE DRAWINGS

Fig. 1 is a block diagram showing an arrangement of a camera-equipped display device which is a first embodiment of the present invention.
Fig. 2 is a block diagram showing an arrangement of a camera-equipped display device which is a second embodiment of the present invention.
Fig. 3 is a block diagram showing an arrangement of a camera-equipped display device which is a third embodiment of the present invention.
Fig. 4 is a block diagram showing an arrangement of a camera-equipped display device which is a fourth embodiment of the present invention.

### DESCRIPTION OF THE PREFERRED EMBODIMENTS

An image display system and a display device, which are constructed according to the present invention, will be described with reference to the accompanying drawings.

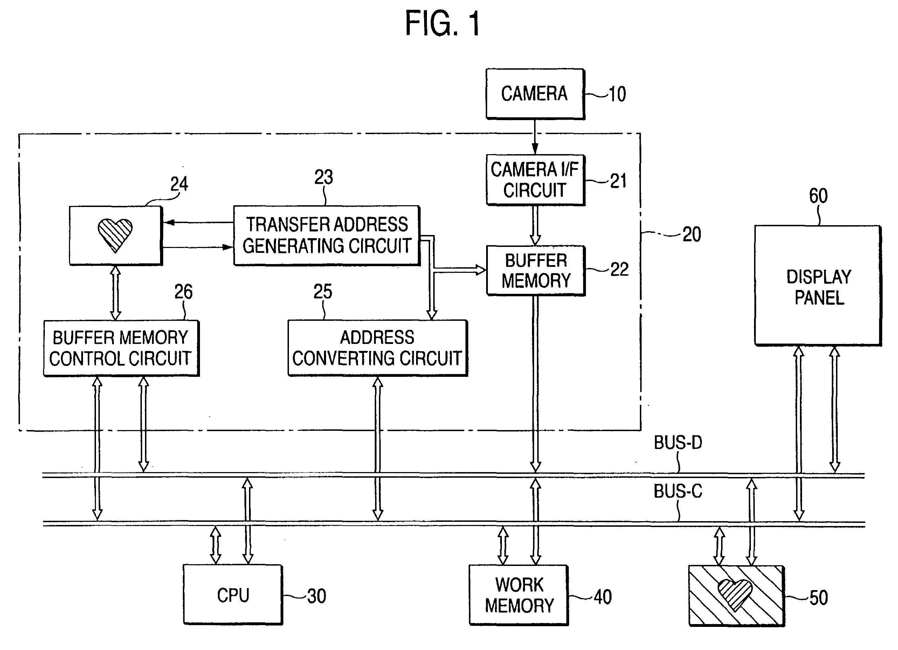

Fig. 1 is a block diagram showing an arrangement of a display device which is a first embodiment of the present invention.

In Fig. 1, a camera 10 captures the image of an object and inputs the image data of its captured image to an area image data generating section 20. The camera 10 may be provided with the display device or separately provided apart from the display device. The camera may be also substituted by any other suitable means, such as a CCD or a line-type image sensor, and so on.

The area image data generating section 20 outputs an area image data, in other words the image data of a specific area of the image data captured by the camera 10. The area image data generating section 20 includes a camera I/F circuit 21, a buffer memory 22, an area memory 24, a transfer address generating circuit 23, an address converting circuit 25, and an buffer memory control circuit 26. The camera I/F circuit 21 is functioning as an interface of the captured image data from the camera, through which the captured image data is stored in the buffer memory 22. The area memory 24 is functioning as specific area storage means for storing a specific area of the captured image as an area map. Further, the transfer address generating circuit 23 generates a transfer address in accordance with a specific area in the area memory 24. The address converting circuit 25 converts the transfer address to another address. The buffer memory control circuit 26 is controlling the area memory for storing the specific area into the area memory 24. The area image data generating section 20 is manufactured as an image processor IC in a single IC chip.

A CPU 30 controls the overall performance of the display device of the invention, which is connected to the related structuring elements, and control them. A work memory 40 is formed by a RAM, for example, and is used for the CPU 30, controlling the structuring elements, or used for storing the specific area of the captured image, frame image data and so on.

A display memory 50 stores image data to be displayed on a display panel, and specifically stores in-frame captured image data, which is the composite image of the frame image data and the area image data.

A display panel 60 may be an LCD panel, an organic EL panel or the like, and includes a display driver for causing the display panel to display images.

A data bus BUS-D is connected to the structuring elements, which is used for transmitting the image data thereto. A control bus BUS-C includes an address bus through which address signals are transmitted, and further includes chip select signal lines, read/write signal lines, clock signal lines, various bus control signal lines, and so on. Those buses and signal lines are connected to structuring elements.

Operation of the display device having the aforementioned structures will be described below with the respective structuring elements thereof.

To display the in-frame captured image data, image data to be a frame image stored in the work memory 40 is written into the display memory 50 at first under control of the CPU 30, via the data bus BUS-D and the control bus BUS-C. The image data to be the frame image data may be image data of an area other than a specific area (e.g. a heart shaped area in the figures). Alternatively, when the image data of the specific area is to be over-written onto the frame image later on, the image data for one screen may be written, without considering of the specific area. In this case, the image data of one screen is written as the frame image data into the display memory 50. Although the data amount to be written is large, the data can be written in the same manner, irrespective of a shape of the specific area.

As for the image data to be the frame image, it is possible for the user to select it from plural pieces of image data stored in the work memory 40 according to the user's taste, however, it is not the case that happens so often.

Next, an object is captured by the camera 10, and the captured image for every screen data with a synchronous signal is input to the camera I/F circuit 21 of the area image data generating section 20. The input captured image data entered is written into the buffer memory 22 for every one-screen data amount according to a write address produced by the synchronous signal.

The area memory 24 as specific area storing means is comprised of a RAM, for instance, in which one pixel is represented by 1 bit. The specific area can be stored in such a way that the value "1"' is set to the specific area (e.g. heart shaped area in the figure), and "0"' to the non-specific area, and vice versa. Storing of the specific area into the area memory is performed under control of the buffer memory control circuit 26, in response to a command from the CPU 30.

The shape and size of the specific area in the area memory 24 can be optionally selected, and one or more specific areas may be set in the memory. For the purpose of checking the specific area being set in this way, the CPU 30 enables to read out the specific area from the memory under control of the buffer memory control circuit 26.

The specific area stored in the area memory 24 is successively read out by a raster scan, in response to a command signal from the transfer address generating circuit 23. When a bit "1" indicative of the specific area is detected in the area memory 24, the transfer address generating circuit 23 generates an address corresponding thereto, and supplies the address as a read-out address to the buffer memory 22. The image data specified by the read-out address is read out from the buffer memory 22.

The read-out address is supplied also to the address converting circuit 25. The address converting circuit converts the read-out address in a predetermined manner, and supplies the converted address to the control bus BUS-C. This address converting circuit 25 is used for converting the addresses of the area image data generating section 20 and that of the CPU 30 or the display memory 50, when an address expression in the area image data generating section 20 is different from that in the CPU 30 or the display memory 50,. Therefore, in case of both of the address expressions being the same, there is no need for using the address converting circuit 25.

When a bit "0" representative of the non specific area is detected in the area memory 24, the read-out address generating circuit 28 does not generate an address, but generates a write inhibiting signal. The generated write inhibiting signal is supplied to the control bus BUS-C, through the address converting circuit 25.

The captured image and address data of the specific area of the captured image for one screen are supplied from the area image data generating section 20 to the data buses BUS-D and BUS-C.

In a state that the captured image data and its address are supplied from the area image data generating section 20, the image data is directly transferred to the display memory 50 by the DMA (direct memory access) method under control of the CPU 30. As to the details of the DMA method, a memory cycle steal method, a CPU cycle steal method, an interlock method, or some other relevant method might be considered. Such appropriate methods might be selectively applied to the DMA method according to the display system.

Having the DMA method being applied in this way, the image data of the specific area, namely, the area image data, is directly transferred from the buffer 22 to the display memory 50 whose memory area is determined by the address corresponding to the specific area, while it is supplied to the work memory 40 in the conventional art. The in-frame image data is already stored in an area other than the specific area. Accordingly, as the result of storing the area image data, the in-frame captured image data is stored in the display memory 50. Further, the area image data is successively updated.

Therefore the in-frame captured image data in the display memory 50, which is successively updated, is displayed on the display panel 60.

Further, in case of the frame image being not displayed, the CPU 30 generates and supplies an address, which might be corresponding to the entire screen area, to the buffer memory 22 through the address converting circuit 25 so that the image data of one screen is successively read out from the butter memory 22. The read-out image data is DMA transferred to the display memory 50 according to the generated address, and the captured image data is stored in the display memory 50.

In the first embodiment as shown in Fig. 1, the image data to be the frame image is pre-stored in the display memory 50, and only the captured image data of the specific area is DMA transferred thereafter so that the captured image is displayed together with the frame image to form the in-frame captured image. For the reason such that only the image data of the specific area is transferred, the amount of transferred data can be reduced, and the number of times of operations for transferring the image data can be reduced. Consequently, the occupation rate of the data buses BUS-D and BUS-C, and the CPU processing load can be reduced. Further, the display frame rate is increased, and a more smooth moving picture display is realised. Further, the area memory 24 is used for storing the specific area to be DMA transferred, so that the specific area may be shaped as desired.

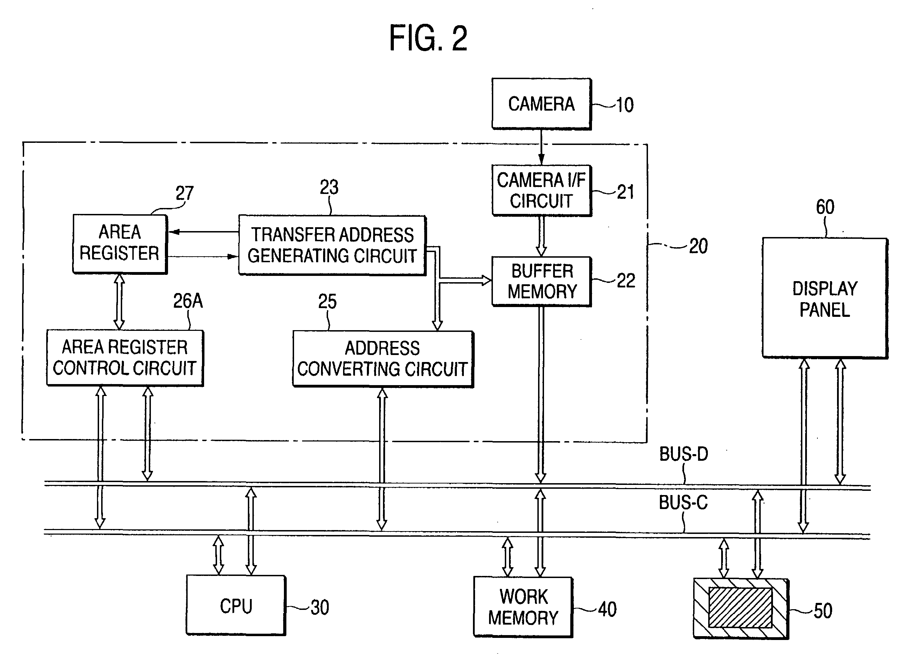

Fig. 2 is a block diagram showing an arrangement of a camera-equipped display device which is a second embodiment of the present invention.

The embodiment of Fig. 2 is different from that of Fig. 1 in that an area register 27 is used in place of the area memory 24 for the specific area storing means, and an area register control circuit 26A is used in place of the buffer memory control circuit 26. The remaining portions of the second embodiment are substantially the same as those of the first embodiment of Fig. 1.

The area register 27 is a register for storing the coordinates comprised of the plural points to define a specific area. The coordinates for the plurality of points are supplied to the area register 27, through the area register control circuit 26A

In the event of setting a certain rectangular area, only two sets of coordinates are required. In this regards, the combination of area register 27 and the area register control circuit 26A is more simplified arrangement than that of the address converting circuit 25 and the buffer memory control circuit 26. As for the numbers of the rectangular areas, it is not limited to a single area but also a plurality of rectangular areas may be also set up. Moreover, specific areas in various shapes may be also formed by combining a plurality of rectangular areas in proper manner.

Since the coordinates for determining the specific area are expressed by numerical data, the transfer address generating circuit 23 can recognize a specific area immediately on the basis of the numerical data of the coordinates. For judgement whether or not an address should be generated, the area map of the area memory 24 in Fig. 1 requires the successive checks. On the other hand, however, in this embodiment, the transfer address generating circuit generates immediately only just the addresses of the specific area without need of such successive checks.

Thus, the second embodiment adopts the area register 27 as means for storing the specific area which will be DMA transferred, whereby the specific area is readily defined by designating the coordinates with a plurality of points (at least 2 points) so that the addresses of the specific area can be generated immediately.

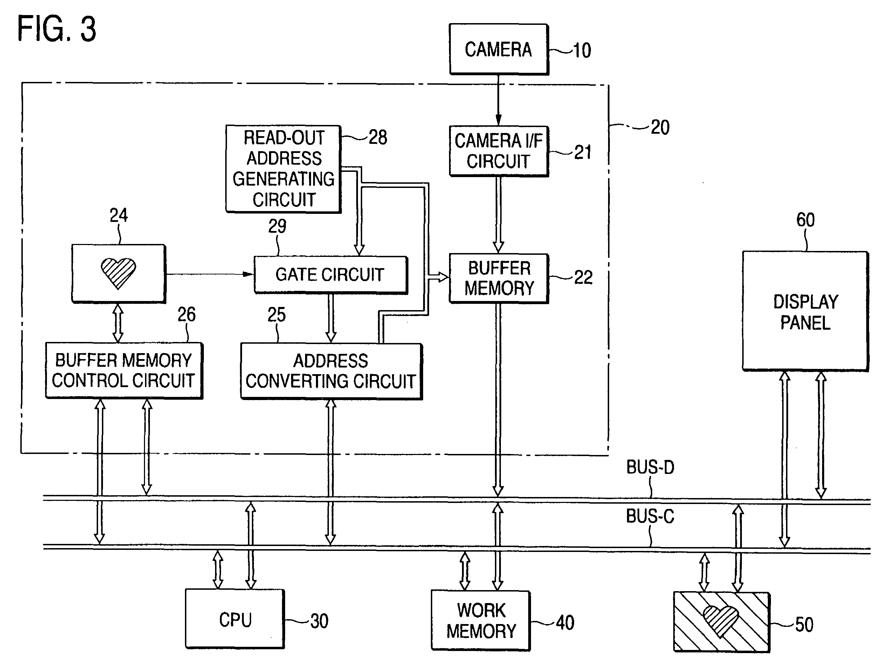

Fig. 3 is a block diagram showing an arrangement of a camera-equipped display device which is a third embodiment of the present invention.

The arrangement of Fig. 3 adopts a read-out address generating circuit 28 for generating a read-out address, and supplies it to the buffer memory 22. Further, a gate circuit 29 is provided To which a read-out address generated by the read-out address generating circuit 28 is supplied. The gate circuit 29 controls permission or prohibition of the read-out address to pass therethrough in accordance with its enable-state or disenable-state. The remaining portions of this embodiment are substantially the same as those of the first embodiment of Fig. 1.

The gate circuit 29 receives the signals representing the values of "1" or "0" in accordance with the area map of the area memory 24. In other words, an enable-state or a disenable-state of the gate circuit 29 is dominated by the area map of the area memory 24. When the gate circuit 29 is disabled to prohibit the address signal from passing therethrough, the gate circuit 29 or the address converting circuit 25 produces a write inhibiting signal in stead of the address signal, and supplies it to the control bus BUS-C.

Image data is read out from the buffer memory 22 as specified by an address generated by the read-out address generating circuit 28. As to the address data, only the addresses corresponding to the area map of the area memory 24 are supplied to the control bus BUS-C, while a write inhibiting signal is supplied to the same bus for the address other than those addresses corresponding to the area map.

As a result, the image data read out from the buffer memory 22 is supplied to the data bus BUS-D, only the image data of the portion corresponding to the area map of the area memory 24 is DMA transferred to the display memory 50, and stored thereinto.

Thus, in the third embodiment, by generating the read-out addresses by the read-out address generating circuit 28, and the image data is supplied from the buffer 22 to the control bus BUS-C where the read-out addresses are transferred thereto by way of the gate circuit which is enabled or disenabled in accordance with the area map of the area memory 24. As a result, only the image data corresponding to the area map is DMA transferred to the display memory.

A third embodiment of the invention will be described. In this embodiment, an area register 27 is adopted in place of the area memory 24 by which similar effect is expected to see as previously described, and further the unique advantage by using the area register 27 as described in the second embodiment can be also expected.

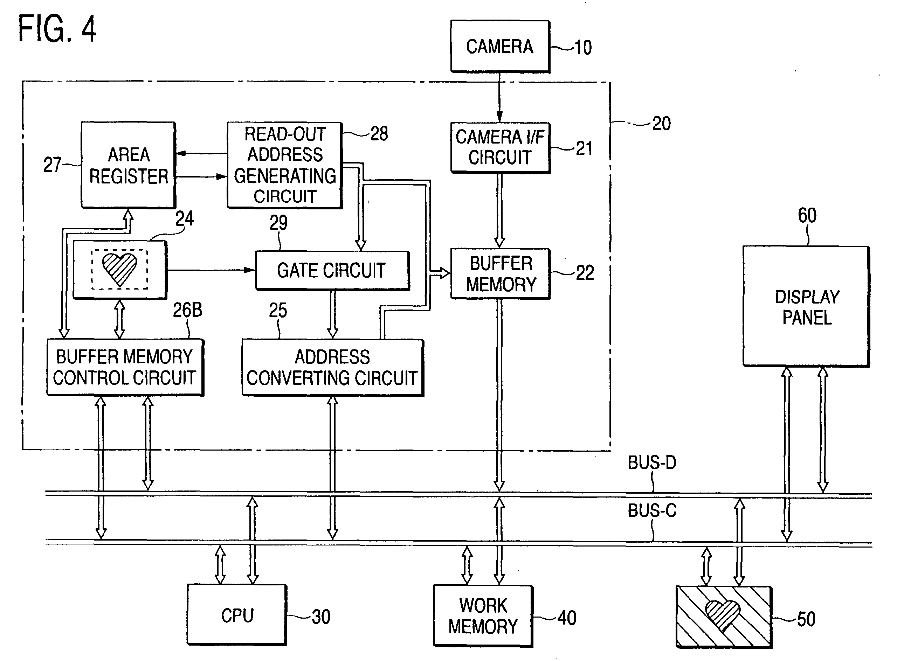

Fig. 4 is a block diagram showing an arrangement of a camera-equipped display device which is the fourth embodiment of the present invention.

In Fig. 4, in addition to the area memory 24, the area register 27 is provided, by which determines an address generating area of a read-out address generated by the read-out address generating circuit 28. The area register 27 might be alternatively incorporated into the read-out address generating circuit 28. An area in the area register 27 is set to a size as indicated by a broken line rectangular area so as to contain the entire area map (e.g. a heart shape) in the area memory 24. It is suggestible to set said size of the area register to be minimized to containthe area map. Further, an buffer memory control circuit 26B is provided which stores the specific area as the area map into the area memory 24, and stores the coordinates for a plurality of points for determining the area for generating the read-out address into the area register 27. The remaining portions of the instant embodiment are substantially the same as those of the third embodiment of Fig. 13

The coordinates for determining the area corresponding to the read-out address from the read-out address generating circuit 28 are expressed by numerical data. Therefore, the read-out address generating circuit 28 can instantly recognize the address generating area on the basis of the numerical data of the coordinates. For the judgement as to whether or not an address should be generated, the area map requires the successive checks. On the other hand, however, in this embodiment, the read-out address generating circuit generates immediately only just the addresses of the specific area without need of such successive checks.

The fourth embodiment modules the third embodiment of Fig. 3 such that the area to generate the read-out address is set to the rectangular area minimized enough to contain the area map to be DMA transferred. Therefore, concerning the data amount of the image data to be read out from the buffer memory 22, useless image data such as not needed to be DMA transferred is reduced so that the occupation rates of the data buses BUS-D and BUS-C are further reduced.

As seen from the foregoing description, this invention is the display device system for displaying the captured image together with frame image whose image data is pre-stored in the display memory, while DMA transfer is only performed to update an area in a display memory, such as the captured image data of a specific area. Therefore, the amount of data transfer of the captured image data can be reduced, and the numbers of operation times of transferring the image data can be also reduced. This results in reduction of the occupation rate of the data bus, the address bus, and the CPU processing load. As a result, the display frame rate becomes high, and a more smooth moving picture display can be realized.

Further, by adopting an area memory as means for storing the specific area to be DMA transferred, the specific area can be shaped as desired. An area register is used for means for storing the specific area to be DMA transferred. Therefore, the specific area is readily defined by designating the coordinates represented by a plurality of points (at least 2 points).

Image data to be the frame image is pre-stored in a display memory, while only an updating area in a display memory, namely an area image data of a specific area, is DMA transferred. Therefore, the amount of data transfer required for the captured image data is reduced, and the numbers of operation times of transferring the image data is also reduced.

## Claims

1. An image display system comprising:
a display memory for storing display image data to be displayed on a display panel;
an area image data generating section for supplying an area image data which is corresponding to a specific area of a captured image data by a image capturing device to said display memory; and
a CPU which is coupled to said display memory and to said area image data generating section so as to perform controls thereof,
wherein said CPU stores a frame image data to be a frame image into said display memory before said area image data is transferred to said display memory, whereby said frame image data and said area image data are composed with each other to form an in-frame captured image data to be stored into said display memory, said in-frame captured image data being displayed on said display panel.

2. A display device comprising:
a display panel;
a display memory for storing a display image data to be displayed on a display panel;
storing means for storing a frame image data to be a frame image to be supplied to said display memory;
an image capturing device;
an area image data generating section for supplying an area image data which is corresponding to a specific area of an image data captured by said image capturing device to said display memory; and
a CPU which is connected to said display panel, said display memory, said storing means, said image capturing device, and said area image data generating section so as to perform controls thereof,
wherein said CPU reads out a frame image data to be a frame image from said storing means and stores said frame image data into said display memory before said area image data is transferred to said display memory, whereby said frame image data and said area image data are composed with each other to form an in-frame captured image data to be stored into said display memory, said in-frame captured image data being displayed on said display panel.

3. A display device according to claim 2, wherein said area image data generating section includes a buffer memory for storing said captured image data, specific area storing means for storing said specific area in said captured image, and a transfer address generating circuit for successively generating addresses of said specific area in said specific area storing means, wherein the addresses of said specific area generated by said transfer address generating circuit are also supplied to said buffer memory so that an image data specified by said addresses are successively read out and output.

4. A display device according to claim 2, wherein said area image data generating section supplies to said display memory with said area image data corresponding to said specific area as a valid data, while an image data other than said specific area is defined as an invalid data.

5. A display device according to claim 4, wherein said area image data generating section includes a buffer memory for storing said captured image data, specific area storing means for storing said specific area in said captured image, gate means for receiving a gate signal from said specific area storing means, and a read-out address generating circuit for generating a read-out address and supplying said read-out address to said buffer memory and said gate means, wherein only said read-out address corresponding to said specific area stored in said specific area storing means is passed through said gate means so that said area image data is made valid, while the image data other than said area image data is made invalid.

6. A display device according to claim 3 or 5, wherein said specific area storing means includes an area memory for storing said specific area as an area map.

7. A display device according to claim 3 or 5, wherein said specific area storing means includes an area register used for determining said specific area in accordance with the coordinates for a plurality of points.

8. A display device according to claim 5, wherein said specific area storing means includes an area memory for storing said specific area as an area map, and said read-out address generating circuit includes an area register used for determining a specific area for generating a read-out address in accordance with the coordinates for a plurality of points.
